# EUROPÄISCHE PATENTSCHRIFT

(11) **EP 3 952 637 B1**
(45) Veröffentlichungstag und Bekanntmachung des Hinweises auf die Patenterteilung: **13.11.2024**
(21) Anmeldenummer: 20740182.9
(22) Anmeldetag: 07.04.2020
(51) Int. Cl.: A01K 1/035, A01K 13/00, A47C 27/00, A47C 31/00

(54) **RUHEVORRICHTUNG FÜR TIERE UND MENSCHEN MIT ISOLIERUNG**
RESTING APPARATUS FOR ANIMALS AND PERSONS WITH INSULATION
DISPOSITIF DE REPOS POUR ANIMAUX ET ÊTRES HUMAINS, POURVU D'UNE ISOLATION

(30) Priorität: 09.04.2019 DE 202019001611 U; 20.04.2019 DE 202019001779 U
(43) Veröffentlichungstag der Anmeldung: 16.02.2022
(73) Patentinhaber: Fountoulakis, Tzanis, 32694 Dörentrup (DE)
(72) Erfinder: Fountoulakis, Tzanis, 32694 Dörentrup (DE)
(74) Vertreter: Kayser, Christoph
(86) Internationale Anmeldenummer: PCT/DE2020/100284
(87) Internationale Veröffentlichungsnummer: WO 2020/207538

(56) Entgegenhaltungen:
- DE-U1- 8 908 598
- JP-B1- 4 094 653
- US-A- 2 507 586
- US-A1- 2008 216 752
- US-A1- 2014 165 923

## Beschreibung

Die vorliegende Erfindung betrifft eine Ruhevorrichtung für Tiere und Menschen mit einem wendbaren Grundkörper, der eine erste Lagerfläche und eine zweite Lagerfläche bildet, wobei die zweite Lagerfläche der ersten Lagerfläche entgegengesetzt und im Wesentlichen flächenparallel zur ersten Lagerfläche ausgerichtet ist.

Eine solche Ruhevorrichtung ist aus JP 4094653 B1 bekannt. Diese Ruhevorrichtung weist zwei einander entgegengesetzte Liegeflächen auf, die jeweils zu einer unterschiedlichen Jahreszeit genutzt werden können. Die eine Liegefläche weist eine wärmeisolierende Schicht auf, sodass ein auf dieser Liegefläche ruhendes Tier in der warmen Jahreszeit kühler liegt. Die entgegengesetzte Liegefläche weist eine wärmespeichernde Schicht auf, auf der ein ruhendes Tier in der kalten Jahreszeit wärmer liegt.

Ein Nachteil der Ruhevorrichtung aus JP 4094653 B1 ist, dass beide Liegeflächen ihre Eigenschaften durch jeweils eine spezielle Ausbildung der jeweiligen Liegefläche erhalten. So muss eine wärmeisolierende Schicht in der Nähe der einen Liegefläche und eine wärmespeichernde Schicht in der Nähe der jeweils anderen Liegenfläche ausgebildet sein.

Aus US 2014/165923 A1 ist ein Kissen bekannt. Das Kissen weist eine einzige Liegefläche für Katzen auf. Dieses Kissen soll auf einem Möbelstück, wie einer Couch, einem Bett, Stuhl etc, platziert werden, um dieses vor den Krallen der Katze zu schützen. Damit die Katze das Kissen attraktiv findet, ist in die Liegefläche eine Metallschicht ausgebildet. Das Kissen ist ein katzenfreundliches Spielzeug, an dem die Katze ihre Klauen instinktiv glätten oder feilen kann. Dadurch werden die Möbel zuhause vor Kratzspuren bewahrt. Eine in die Liegefläche eingearbeitete Aluminiumfolie führt zu einer Erwärmung der Liegefläche durch die Eigenwärme der auf der Liegefläche liegenden Katze.

Aus DE 89 08 598 U1 ist eine Pferdedecke mit einer schützenden Innenschicht und mit einer formfesten Außenschicht bekannt. Zwischen diesen beiden Schichten ist eine gas- und dampfdurchlässige Wärme-Reflektionsschicht angeordnet. Eine Liegefläche weist die Pferdedecke nicht auf. Zudem ist mit dieser auch nur ein Schutz gegenüber Kälte möglich. Ein Schutz gegenüber Wärme ist nicht offenbart.

Aus US 2008/216752 A1 ist ein Bett für Haustiere bekannt, dessen Grundkörper umgedreht werden kann. Beim Umdrehen aus der einen Ausrichtung in die andere Ausrichtung muss ein Liegekissen entnommen werden, dass in beiden Ausrichtungen zum Einsatz kommt und keine Isolierlage aufweist, die das Tier vor Wärme oder Kälte schützt.

Ruhevorrichtungen der eingangs genannten Art und aus US 2014/165923 A1 sowie US 2008/216752 A1 sind im Handel als Hundebetten, Katzenbetten oder Matratzen zu finden und können ganz unterschiedlich gestaltet sein. So gibt es Ruhevorrichtungen, die nur matratzenartig, flächig gestaltet sind, aber auch Ruhevorrichtungen, die Seitenränder und eine Rückwand (Lehne) aufweisen. Dabei ist es möglich, dass die Matratze in einem Körbchen und Seitenrand und Lehne aufgenommen ist oder mit den Seitenrändern und der Lehne eine Einheit bildet. Im Stand der Technik ist das eigentliche Bett oder Kissen der Ruhevorrichtung, also der Bereich, auf dem das Tier oder der Mensch liegt, aus einer Art Matratze hergestellt. Die Eigenschaft der Matratze sorgt im Wesentlichen für eine weiche und für das Lebewesen kuschelige Unterlage. Ruhevorrichtungen im Sinne der vorliegenden Erfindung sind aber auch solche, die für stehend schlafende Tiere geeignet sind, z.B. Pferde. Diesen wird die Ruhevorrichtung z.B. als Decke übergelegt. Aus diesem Grunde wird im Kontext der vorliegenden Beschreibung von Lagerfläche und Lagerschicht gesprochen und nicht von Liegefläche und Liegeschicht. Tiere können sich also auf der Lagerfläche oder Lagerschicht zur Ruhe lagern oder die Ruhevorrichtung wird mit der Lagerfläche oder Lagerschicht über den Rücken des stehenden Tieres, z.B. Pferdes, gelegt, so dass diese auf dem Tier lagert.

Die Aufgabe der vorliegenden Erfindung ist daher, eine Ruhevorrichtung der eingangs genannten Art zu schaffen, bei der eine gegenüber dem Stand der Technik vereinfachte optimierte Temperaturregulierung zum Wohlbefinden der auf einer Lagerfläche ruhenden Tiere und Menschen beiträgt.

Die Aufgabe wird gemäß dem kennzeichnenden Teil von Anspruch 1 gelöst.

Mit der vorliegenden Erfindung ist es nunmehr möglich, mit nur einer einzigen Isolierlage in der Nähe einer der beiden einander entgegengesetzten Lagerflächen nicht nur Kälte abzuhalten und die Körperwärme für ein Wohlfühlen auf der ersten Lagerfläche zu nutzen, sondern auch nach einem Wenden des Grundkörpers hohe Umgebungstemperaturen (Wärme) daran zu hindern, von unten aufsteigende Wärme aus der Ruhevorrichtung über die zweite Lagerfläche auf ein darauf ruhendes Lebewesen zu übertragen. Insofern wirkt die Ruhevorrichtung mit nur einer einzigen Isolierlage in der Nähe der ersten Lagerfläche für das auf dieser ersten Lagerfläche ruhende Lebewesen kühlend im Vergleich zur wärmeren Umgebung ist und für das auf der zweiten Langerfläche ruhende Lebewesen wärmend im Vergleich zur kühleren Umgebung ist.

Es ist optional möglich, dass der Grundkörper auch ganz oder teilweise von einer Außenhülle umgeben ist.

Erfindungsgemäß ist, dass die eine Isolierlage eine erste Lagerschicht aus einem textilen Material umfasst. Ein textiles Material ist für ein auf der ersten Lagerschicht der ersten Lagerfläche lagerndes Lebewesen angenehm. Ein solches textiles Material kann neben den isolierenden Eigenschaften auch weitere Eigenschaften haben, die sich günstig für das Wohlbefinden des Lebewesens erweisen. Zum Beispiel kann ein solches textiles Material Feuchtigkeit absorbieren.

Erfindungsgemäß ist, dass die eine Isolierlage zudem nur noch eine Isolierschicht aus Metall umfasst. Eine typische Isolierschicht aus Metall ist zum Beispiel eine Aluminiumschicht, die eine hervorragende Sperre für sich zur ersten Lagerfläche hin ausbreitende Wärme darstellt.

Erfindungsgemäß ist, dass der Grundkörper eine zweite Lagerfläche bildet, die der ersten Lagerfläche entgegengesetzt und im Wesentlichen flächenparallel zur ersten Lagerfläche ausgerichtet ist. Durch diese Anordnung einer zweiten Lagerfläche ist eine doppelseitige Nutzung der Ruhevorrichtung möglich.

Erfindungsgemäß ist, dass die zweite Lagerfläche eine zweite Lagerschicht bildet, die aus einem textilen Material hergestellt ist. Die zweite Lagerfläche unterscheidet sich also von der ersten Lagerfläche darin, dass eine Isolierlage nicht vorhanden ist. Die zweite Lagerfläche ist aus einem textilen Material hergestellt, das zum Wohlbefinden des auf der zweiten Lagerfläche ruhenden Lebewesens beitragen kann, zum Beispiel Samt.

Erfindungsgemäß ist, dass zwischen der ersten und zweiten Lagerfläche ein nachgiebiges Füllmaterial ausgebildet ist. Es ist günstig, dass die erste Lagerfläche und die zweite Lagerfläche nicht nur direkt aneinander angrenzen, sondern zwischen sich ein Füllmaterial einschließen, das nachgiebig ist und zum Wohlbefinden des auf der ersten oder zweiten Lagerfläche ruhenden Lebewesens beiträgt.

Ein weiterer Vorteil der vorliegenden Erfindung ist, dass das nachgiebige Füllmaterial von der ersten Lagerschicht und der zweiten Lagerschicht teilweise umschlossen ist. Die erste Lagerschicht und die zweite Lagerschicht umschließen das nachgiebige Füllmaterial vorzugsweise an fünf Seiten, also an der ersten Lagerfläche und an angrenzende Verbindungseiten zur zweiten Lagerfläche herstellen.

Erfindungsgemäß ist, dass der Grundkörper gewendet werden kann und die eine Isolierlage mit der ersten Lagerfläche oben einen Wärmeschutz für ein auf der ersten Lagerfläche ruhendes Lebewesen bildet und die eine Isolierlage mit der ersten Lagerfläche unten einen Kälteschutz für das auf der zweiten Lagerfläche ruhende Lebewesen bildet. Mit oben lagernder Isolierlage wird aufsteigende Umgebungswärme vom Lebewesen abgehalten und mit unten lagernder Isolierlage wird verhindert, dass die zweite Lagerfläche in Körperwärme durch eindringende Kälte abgekühlt wird.

Ein weiterer Vorteil der vorliegenden Erfindung ist, dass das nachgiebige Füllmaterial Kunststoff oder Gas/Luft umfasst. Die Nachgiebigkeit des Füllmaterials kann in beliebiger Weise gegeben sein. So sind einerseits und vorzugsweise Kunststoffe als nachgiebiges Füllmaterial vorgesehen. Aber auch andere Füllmaterialien mit nachgiebigen Eigenschaften, wie Gas, Luft, Wasser oder natürliche Füllstoffe, wie z. B. Dinkel, können im Sinne der vorliegenden Erfindung als nachgiebiges Füllmaterial verstanden werden.

Ein weiterer Vorteil der vorliegenden Erfindung ist, dass der Kunststoff ausgewählt ist aus einer Gruppe bestehend aus Polypropylen, Polypropylen-Fasern, Polyurethanschaum, viskoelastischer Polyurethanschaum mit Memory-Effekt.

Diese Kunststoffmaterialien eignen sich besonders für die erfindungsgemäße Ruhevorrichtung mit Isolierlage zur Temperaturregelung.

Weitere Vorteile der vorliegenden Erfindung ergeben sich aus den weiteren Merkmalen der Unteransprüche.

Ausführungsformen der vorliegenden Erfindung werden im Folgenden anhand der Zeichnung näher beschrieben. Es zeigen:
Fig. 1 eine schematische Explosionsdarstellung eines dreilagigen Grundkörpers für eine Ruhevorrichtung gemäß vorliegender Erfindung in einer ersten Ausführungsform; und
Fig. 2 eine schematische Explosionsdarstellung eines dreilagigen Grundkörpers für eine Ruhevorrichtung gemäß vorliegender Erfindung in einer zweiten Ausführungsform.

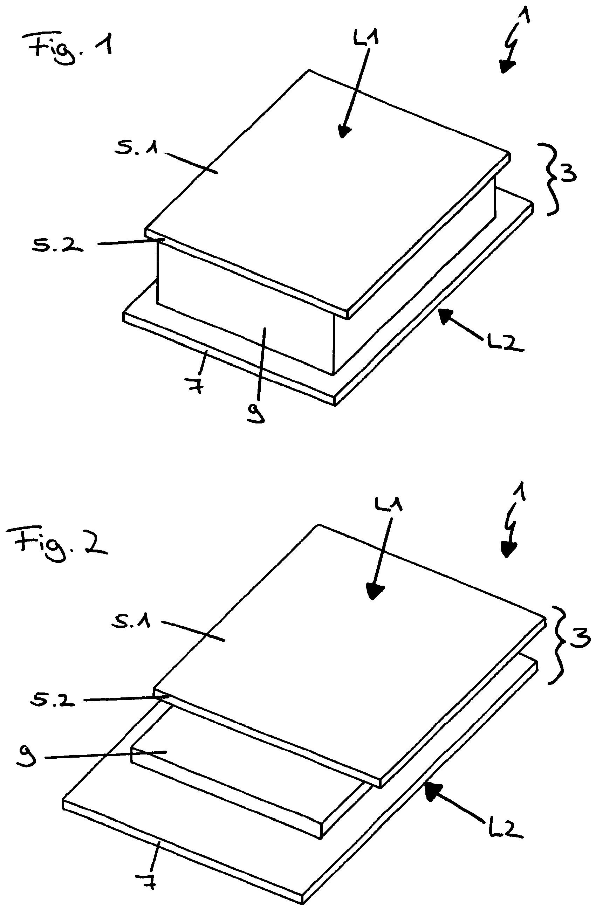

In Fig. 1 ist eine erste Ausführungsform einer Ruhevorrichtung 1 gemäß vorliegender Erfindung schematisch dargestellt. Die Ruhevorrichtung 1 umfasst in der ersten Ausführungsform einen Grundkörper 3, der im Wesentlichen aus drei Lagen zusammengesetzt ist und in der Praxis sechs Seiten aufweist. Die Form des Grundkörpers 3 kann beliebig gestaltet sein und zum Beispiel auch eine Seitenumrandung (nicht dargestellt) oder eine Lehne (nicht dargestellt) umfassen. In der dargestellten Ausführungsform weist der Grundkörper 3 eine erste Lagerfläche L1 auf. Die erste Lagerfläche L1 besteht aus einer Isolierlage 5. Die eine Isolierlage 5 wiederum ist erfindungsgemäß zweischichtig ausgebildet.

So umfasst die eine Isolierlage 5 der dargestellten Ausführungsform eine erste Lagerschicht 5.1 aus einem textilen Material, das isolierende Eigenschaften hat. Neben diesen isolierenden Eigenschaften kann das textile Material auch atmungsaktiv sein und vorzugsweise auch Feuchtigkeit absorbieren. Ein solches Material ist im Handel z. B. als OMNI-HEAT^{®} bekannt.

In der dargestellten Ausführungsform umfasst die Isolierlage 5 neben der ersten Lagerschicht 5.1 auch eine zweite Isolierschicht 5.2. Die zweite Isolierschicht 5.2 ist im Wesentlichen eine flächige oder punktförmige Metallbeschichtung, vorzugsweise Aluminium oder Silber. Die erste Lagerschicht 5.1 ist dem ruhenden Lebewesen zugewandt und die zweite Isolierschicht 5.2 ist dem auf der ersten Lagerfläche L1 ruhenden Tier abgewandt.

Der Grundkörper 3 der erfindungsgemäßen Ruhevorrichtung 1 umfasst auch eine zweite Lagerfläche L2, die in Fig. 1 nach unten gerichtet ist und in dieser Darstellung nicht als Lagerfläche genutzt werden kann. Die zweite Lagerfläche L2 ist aus einem textilen Material, wie zum Beispiel einem Samtstoff, hergestellt. Alternativ kann auch die zweite Lagerfläche L2 aus einem weichen textilen Material hergestellt sein, das feuchtigkeitsabsorbierend und atmungsaktiv ist. Mit textilem Material sind Faserstoffe gemeint, die einen natürlichen oder künstlichen Ursprung haben. Auch Mischungen solcher Fasern sind von der vorliegenden Erfindung umfasst.

Eine Verbindung (nicht dargestellt) zwischen der ersten Lagerfläche L1 und der zweiten Lagerfläche L2 kann beliebig erfolgen. Vorzugsweise ist die erste Lagerfläche L1 über angrenzende Verbindungsseiten mit der zweiten Lagerfläche L2 umfänglich verbunden, wobei in dem umschlossenen Volumen ein nachgiebiges Füllmaterial 9 angeordnet ist. Das Material der ersten Lagerfläche L1, also die eine Isolierlage 5 mit der ersten Lagerschicht 5.1 und der ersten Isolierschicht 5.2 erstreckt sich dann vorzugsweise von der ersten Lagerfläche L1 auch über die vier Verbindungsseiten bis zur zweiten Lagerfläche L2. Das nachgiebige Füllmaterial 9 kann im Grunde ein beliebiges Füllmaterial sein, das in Abhängigkeit vom Gewicht eines auf der ersten Lagerfläche L1 oder der zweiten Lagerfläche L2 ruhenden Lebewesens nachgebende Eigenschaften hat. Die Verbindung zwischen der ersten Lagerfläche L1 und der zweiten Lagerfläche L2 kann fest oder aber auch teilweise lösbar sein, zum Beispiel durch einen Reißverschluss oder eine Haken/Ösen-Verbindung, um zum Beispiel die erste Lagerfläche L1 und die zweite Lagerfläche L2 von dem nachgiebigen Füllmaterial zu lösen und/oder ganz oder teilweise zu ersetzen.

Vorzugsweise besteht das nachgiebige Füllmaterial aus Kunststoff ausgewählt aus einer Gruppe bestehend aus Polypropylen, Polypropylen-Fasern, Polyurethanschaum, viskoelastischer Polyurethanschaum mit Memory-Effekt. In der in Fig. 1 dargestellten ersten Ausführungsform soll die Ruhevorrichtung 1 eher als Kissen verwendet werden. Dazu eignen sich vorzugsweise weiße Polypropylen-Fasern als Füllmaterial 9.

Die Isolierschicht aus Aluminium ist diesem nachgiebigen Füllmaterial 9 zugewandt.

In Fig. 2 ist eine zweite Ausführungsform der Ruhevorrichtung 1 gemäß vorliegender Erfindung dargestellt. Die Ruhevorrichtung 1 gemäß zweiter Ausführungsform soll vorzugsweise als Bett (nicht als Kissen) verwendet werden. Die erste Lagerfläche L1 ist mit der ersten Lagerfläche L1 der ersten Ausführungsform konstruktiv identisch. Sie weist insbesondere alle Merkmale auf, die auch bereits zur ersten Ausführungsfonn vorstehend beschrieben wurden.

Die zweite Lagerfläche L2 ist ebenfalls aus einem textilen Material hergestellt. Da in dieser zweiten Ausführungsform weniger der Kopf, sondern der Körper des Tieres mit der zweiten Lagerfläche L2 in Verbindung kommen soll, können die ausgewählten textilen Materialien für die Lagerschicht 5.1 etwas anders ausfallen als in der ersten Ausführungsform. So ist die Lagerschicht 5.1 in der vorliegenden zweiten Aus führungs form ein kräftiges Baumwollgewebe in Panamabindung ("Oxford") oder auch ein Oxford-Nylon-Gewebe aus Polyamid-Fasern. Wie in der ersten Ausführungsform kann die Verbindung der ersten Lagerfläche L1 und der zweiten Lagerfläche L2 beliebig ausfallen. Vorzugsweise sollen die erste Lagerfläche L1 und die zweite Lagerfläche L2 auch in der zweiten Ausführungsform fest oder wenigstens teilweise lösbar miteinander verbunden sein. Die technischen Mittel zur Lösung sind identisch mit denen, die zur ersten Ausführungsform vorstehend beschrieben wurden.

Zwischen der ersten Lagerfläche L1 und der zweiten Lagerfläche L2 ist in der zweiten Ausfiihrungsform ebenfalls ein beliebiges nachgiebiges Füllmaterial 9 angeordnet. In der dargestellten Version der zweiten Ausführungsform ist das nachgiebige Füllmaterial 9 ein Polyurethanschaum, insbesondere ein viskoelastischer Polyurethanschaum mit Memory-Effekt. Dadurch wird der Lagerkomfort des Lebewesens besonders unterstützt.

### Bezugszeichen

- 1: Ruhevorrichtung
- 3: Grundkörper
- 5: Isolierlage
- 5.1: erste Lagerschicht
- 5.2: zweite Isolierschicht
- 7: zweite Lagerschicht

- 9: Füllmaterial
- L1: erste Lagerfläche
- L2: zweite Lagerfläche

## Patentansprüche

1. Ruhevorrichtung für Tiere und Menschen mit einem wendbaren Grundkörper (3), der eine erste Lagerfläche (L1) und eine zweite Lagerfläche (L2) bildet,
wobei die zweite Lagerfläche (L2) der ersten Lagerfläche (L1) entgegengesetzt und im Wesentlichen flächenparallel zur ersten Lagerfläche (L1) ausgerichtet ist,
**dadurch gekennzeichnet,**
**dass** der Grundkörper (3) nur aus drei Lagen zusammengesetzt ist,
- wobei die erste Lagerfläche (L1) aus einer zweischichtigen Isolierlage (5) besteht, mit der Wärme von einem auf der ersten Lagerfläche (L1) ruhenden Tier oder Menschen abgehalten wird,
wobei die Isolierlage (5) eine erste Lagerschicht (5.1) aus einem textilen Material und eine zweite Isolierschicht (5.2) aus Metall umfasst, und
- wobei die zweite Lagerfläche (L2) als weitere Lage eine zweite Lagerschicht (7) aus einem textilen Material bildet, und
- wobei zwischen der ersten und zweiten Lagerfläche (L1; L2) als weitere Lage ein nachgiebiges Füllmaterial (9) ausgebildet ist,
wobei die zweite Isolierschicht (5.2) der zweiten Lagerfläche (L2) zugewandt ist, derart, dass die Isolierlage (5) für ein auf der ersten Lagerfläche (L1) ruhendes Lebewesen einen Wärmeschutz bildet und bei einem gewendeten Grundkörper (3) für ein auf der zweiten Lagerfläche (L2) ruhendes Lebewesen einen Kälteschutz bildet,

2. Ruhevorrichtung nach Anspruch 1, **dadurch gekennzeichnet, dass** das nachgiebige Füllmaterial (9) von der ersten Lagerschicht (5.1) und der zweiten Lagerschicht (7) wenigstens teilweise umschlossen ist.

3. Ruhevorrichtung nach Anspruch 2,
**dadurch gekennzeichnet,**
**dass** das nachgiebige Füllmaterial (9) Kunststoff oder Gas/Luft umfasst.

4. Ruhevorrichtung nach Anspruch 3,
**dadurch gekennzeichnet,**
**dass** der Kunststoff ausgewählt ist aus einer Gruppe bestehend aus Polypropylen, Polypropylen-Fasern, Polyurethanschaum, viskoelastischer Polyurethanschaum mit Memory-Effekt.

5. Ruhevorrichtung nach einem der vorstehenden Ansprüche,
**dadurch gekennzeichnet,**
**dass** der Grundkörper (3) eine Lehne und eine Seitenumrandung umfasst.

6. Ruhevorrichtung nach Anspruch 5,
**dadurch gekennzeichnet,**
**dass** sich Lehne und Seitenumrandung des Grundkörpers (3) beim Wenden um 180° umkrempeln lassen.

7. Ruhevorrichtung nach einem der vorstehenden Ansprüche,
**dadurch gekennzeichnet,**
**dass** der Grundkörper (3) ein Gegenstand ausgewählt aus der Gruppe Kissen, Bett, Decke, Matte, Ruhelager und eine Kombination wenigstens zwei dieser Gegenstände ist.

## Claims

1. A resting device for animals and humans with a reversible base body (3), which forms a first bearing surface (L1) and a second bearing surface (L2), wherein the second bearing surface (L2) lies opposite the first bearing surface (L1), and is essentially aligned surface-parallel to the first bearing surfaces (L1), **characterized in that**
the base body (3) is composed only of three plies,
- wherein the first bearing surface (L1) consists of a two-layer insulating ply (5), with which heat is kept away from an animal or human resting on the first bearing surface (L1),
- wherein the insulating ply (5) comprises a first bearing layer (5.1) made of a textile material and a second insulating layer (5.2) made of metal, and
- wherein the second bearing surfaces (L2) as another ply forms a second bearing layer (7) made of a textile material, and
- wherein a flexible filler material (9) is formed between the first and second bearing surface (L1; L2) as the additional ply,
- wherein the second insulating layer (5.2) faces the second bearing surface (L2), such that the insulating ply (5) forms a thermal insulation for a living being resting on the first bearing surface (L1), and given an inverted base body (3) forms a cold protection for a living being resting on the second bearing surface (L2).

2. The resting device according to claim 1, **characterized in that**
the flexible filler material (9) is at least partially enveloped by the first bearing layer (5.1) and the second bearing layer (7).

3. The resting device according to claim 2, **characterized in that**
the flexible filler material (9) is comprised of plastic or gas/air.

4. The resting device according to claim 3, **characterized in that**
the plastic is selected from a group consisting of polypropylene, polypropylene fibers, polyurethane foam, viscoelastic polyurethane foam with memory effect.

5. The resting device according to one of the preceding claims,
**characterized in that**
the base body (3) comprises a backrest and a side frame.

6. The resting device according to claim 5, **characterized in that**
the backrest and side frame of the base body (3) can be turned upside down when turning by 180°.

7. The resting device according to one of the preceding claims,
**characterized in that**
the base body (3) is an object selected from the group comprised of beds, covers, mats, couches, and a combination of at least two of these objects.

## Revendications

1. Dispositif de repos destiné à des animaux et des humains, pourvu d'un corps de base (3) retournable, qui forme une première surface portante (L1) et une deuxième surface portante (L2),
la deuxième surface portante (L2) étant opposée à la première surface portante (L1) et étant orientée sensiblement à surface parallèle à la surface portante (L1),
**caractérisé**
**en ce que** le corps de base (3) ne se compose que de trois couches,
- la première surface portante (L1) étant constituée d'une couche isolante (5) en deux épaisseurs, laquelle retient de la chaleur émanant d'un animal ou d'un humain reposant sur la première surface portante (L1),
- la couche isolante (5) comprenant une première couche portante (5.1) en une matière textile et une deuxième couche isolante (5.2) en métal et
- la deuxième surface portante (L2) formant en tant qu'épaisseur supplémentaire une deuxième couche portante (7) en une matière textile et
- entre la première et la deuxième surfaces portantes (L1 ; L2) étant conçue en tant qu'épaisseur supplémentaire une matière de remplissage (9) souple,
- la deuxième couche isolante (5.2) faisant face à la deuxième surface portante (L2), de telle sorte que la couche isolante (5) forme une protection contre la chaleur pour un être vivant reposant sur la première surface portante (L1) et lorsque le corps de base (3) est retourné, forme une protection contre le froid pour un être vivant reposant sur la deuxième surface portante (L2).

2. Dispositif de repos selon la revendication 1, **caractérisé**
**en ce que** la matière de remplissage (9) souple est entourée au moins partiellement par la première couche portante (5.1) et la deuxième couche portante (7).

3. Dispositif de repos selon la revendication 2, **caractérisé**
**en ce que** la matière de remplissage (9) souple comprend une matière plastique ou du gaz / de l'air.

4. Dispositif de repos selon la revendication 3, **caractérisé**
**en ce que** la matière plastique est sélectionnée dans un groupe constitué du polypropylène, de fibres de polypropylène, de mousse de polyuréthane, de mousse de polyuréthane viscoélastique à effet de mémoire.

5. Dispositif de repos selon l'une quelconque des revendications précédentes,
**caractérisé**
**en ce que** le corps de base (3) comprend un dossier et une bordure latérale.

6. Dispositif de repos selon la revendication 5, **caractérisé**
**en ce que** le dossier et la bordure latérale du corps de base (3) se laissent retrousser lors d'un retournement à 180°.

7. Dispositif de repos selon l'une quelconque des revendications précédentes,
**caractérisé**
**en ce que** le corps de base (3) est un objet sélectionné dans le groupe comprenant un coussin, un lit, une couverture, une natte, un espace de repos et une association d'au moins deux desdits objets.
